# EUROPÄISCHE PATENTANMELDUNG

(11) **EP 1 168 145 A1**
(43) Veröffentlichungstag der Anmeldung: **02.01.2002**
(21) Anmeldenummer: 00113176.2
(22) Anmeldetag: 30.06.2000
(51) Int. Cl.: G06F 3/023

(54) **Tastatur mit integrierter Sende- und Empfangseinrichtung**

(71) Anmelder: Cherry GmbH, 91275 Auerbach (DE)
(72) Erfinder: Lochner, Matthias, 95463 Bindlach (DE); Daum, Arnulf, 96047 Bayreuth (DE)
(74) Vertreter: Frohwitter, Bernhard, Dipl.-Ing.

(57) **Zusammenfassung**

Die vorliegende Erfindung betrifft eine Tastatur mit einer Schnittstelle (11), wobei die Tastatur über die Schnittstelle mit einer ersten elektrischen Vorrichtung (20) in Verbindung steht und eine Sende- und Empfangseinrichtung (12) zum drahtlosen Verbinden der Tastatur mit mindestens einer zweiten elektrischen Vorrichtung (30, 31, 32) aufweist. Dabei findet ein bidirektionaler Datenaustausch (41, 42, 43) zwischen der ersten elektrischen Vorrichtung (20) und der zweiten elektrischen Vorrichtung (30, 31, 32) über der Tastatur (10) statt.

## Beschreibung

Die Erfindung betrifft eine Tastatur mit einer Schnittstelle und einer Sende- und Empfangseinrichtung, wobei die Tastatur über die Schnittstelle mit einer ersten elektrischen Vorrichtung in Verbindung steht und über die Sende- und Empfangseinrichtung mit einer zweiten elektrischen Vorrichtung bidirektional kommuniziert.

In elektronischen Geräten, wie z.B. elektronischen Zeitplanern, Mobilfunkgeräten oder Notebooks, werden vom Endverbraucher eine Menge von Informationsdaten, wie z.B. Adressen, Termine oder Telefonnummern, eingegeben. Dabei besteht oft der Wunsch, die Daten zwischen den einzelnen Geräten auszutauschen oder die Daten über einen Computer einzugeben bzw. die Daten mit einem Computer zu synchronisieren. Zu diesem Zweck ist die neueste Generation von portablen Notebook-Computern mit einer Infrarotschnittstelle ausgestattet. Über diese Infrarotschnittstelle ist z.B. ein Datenaustausch zwischen dem Notebook und einem Mobilfunkgerät möglich.

Anders sieht die Situation bei handelsüblichen Personalcomputern mit separater Tastatur und separatem Bildschirm aus. Solche Rechner sind normalerweise ausschließlich über die parallelen und seriellen Anschlüsse kontaktierbar. Da sich die Rechner meistens auf dem Boden befinden und die Anschlüsse an der Rückseite des Rechners angebracht sind, ist es recht umständlich, den Rechner zu kontaktieren. Noch problematischer ist die Situation, falls der Rechner unter einem Tisch steht und sich die Anschlüsse an der dem Benutzer entgegengesetzt liegenden Seite am Ende des Tisches befinden. Dann ist es noch umständlicher, die Anschlüsse zu erreichen.

Entweder muß der Benutzer unter den Tisch steigen, oder den Rechner hervorziehen, um die Anschlüsse des Rechners zu kontaktieren.

Zur Verbindung eines handelsüblichen Personalcomputers mit einem externen elektrischen Gerät sind mehrere Möglichkeiten bekannt. Zum einen kann man eine Verbindung mit Hilfe eines Kabels zwischen dem externen elektrischen Gerät und dem Rechner herstellen. Dies hat den Nachteil, daß zum einen das Einstecken des Kabels in die Anschlußbuchse des Rechners umständlich ist, zum anderen hat der Benutzer ein weiteres Kabel an seinem Arbeitsplatz liegen. Desweiteren ist bei dieser Lösung nachteilig, daß, sobald das Kabel nicht mehr mit dem externen Gerät verbunden ist, kann es leicht, bedingt durch die noch vorhandene Verbindung mit dem Rechner, unter den Tisch rutschen.

Weiter ist es denkbar, den Datenaustausch zwischen Rechner und externem Gerät über eine Infrarotschnittstelle laufen zu lassen, wodurch ein zusätzliches Kabel vermieden wird. Diesbezüglich ist es bekannt, eine Infrarot-Sende-und Empfangseinheit in dem Rechner oder direkt an den Anschlüssen an der Rückseite des Rechners anzubringen. Da der Rechner jedoch meist durch eine Tischplatte von dem externen Gerät getrennt ist und auch ein gewisser Abstand zwischen den beiden Geräten existiert, kann eine einwandfreie Datenkommunikation zwischen dem externem Gerät und dem Rechner nicht gewährleistet werden. Als Alternative dazu ist es bekannt, eine Infrarot-Sende-und Empfangseinheit über ein Kabel von dem Anschluß auf die Arbeitsfläche zu führen. Dies führt aber zu einem weiteren Kabel bzw. einem weiteren Gerät auf der Arbeitsfläche.

Aus dem deutschen Gebrauchsmuster DE 299 22 853 U1 ist es bekannt, ein Sende/Empfangsmodul in einer Tastatur zu integrieren. Dabei werden Daten von Niedrig-Energie-I/O Vorrichtungen, wie z.B. Maus, Trackball oder Digital-Pad jedoch lediglich empfangen. Es findet kein Senden von Daten von dem Sende/Empfangsmodul an die Niedrig-Energie-I/O Vorrichtungen statt. Über das Sende/Empfangsmodul werden lediglich Daten von einer externen Vorrichtung, die mit Hilfe eines A/D-Umsetzers digitalisiert und über einen digitalen Signalprozessor an einen Prozessor in dem Keyboard weitergeleitet wurden, gesendet. Somit offenbart die DE 299 22 853 U1 keine Sende- und Empfangsdatenkommunikation zwischen einem externen Gerät und einer Tastatur über eine darin integrierte Sende- und Empfangseinheit. Desweiteren offenbart die DE 299 22 853 U1 lediglich eine feste Verbindung über ein Kabel zwischen PC und Tastatur.

Der Erfindung liegt somit die Aufgabe zugrunde, eine bedienerfreundliche bidirektionale Datenkommunikation zwischen externen elektrischen Geräten und einem Personalcomputer über eine Tastatur bereitzustellen.

Diese Aufgabe wird erfindungsgemäß von einer Tastatur gemäß Anspruch 1 gelöst. Dabei wird davon ausgegangen, daß die Tastatur eine Schnittstelle aufweist. Über diese Schnittstelle steht die Tastatur mit einer ersten elektrischen Vorrichtung in bidirektionaler Datenverbindung. In diesem Zusammenhang wird unter Datenverbindung nicht lediglich eine Spannungsversorgung zum Betrieb der elektrischen Vorrichtung gesehen, sondern es wird von einem Informationsdatenaustausch ausgegangen.

In einer Ausführungsform ist die Schnittstelle eine USB (Universal Serial Bus) kompatible Schnittstelle. Desweiteren ist die Verbindung mit der ersten elektrischen Vorrichtung in einer bevorzugten Ausführungsform drahtlos ausgebildet, d.h. der Datenaustausch findet z.B. mit Hilfe von Infrarot- oder Funksignalen statt. Darüber hinaus ist es aber auch denkbar die Verbindung zwischen der ersten elektrischen Vorrichtung und der Tastatur über ein Kabel herzustellen.

In einer weiteren bevorzugten Ausführungsform ist die erste elektrische Vorrichtung ein Computer oder ein Fernsehgerät. Die vorliegende Erfindung soll jedoch nicht auf diese Geräte beschränkt sein. Prinzipiell ist sie auf jede elektrische Vorrichtung anwendbar, welche eine Tastatur benötigt.

Gemäß einer Ausführungsform der Erfindung findet der bidirektionale Datenaustausch zwischen der Tastatur und der zweiten elektrischen Vorrichtung mit Hilfe von Infrarotsignalen statt. Zur Datenübertragung mit Hilfe von Infrarotsignalen hat sich der Infrared Data Association (IrDA)-Standard etabliert. Zukünftig ist mit Infrarottechnik eine Datentransferrate von über 16 Mbit/s möglich. Da bei derzeitig verfügbaren USB-Tastaturen die theoretische USB-Übertragungsbandbreite nur zu 1% ausgenutzt wird, ergibt sich auch diesbezüglich kein Engpaß.

Gemäß einer weiteren Ausführungsform der Erfindung findet der bidirektionale Datenaustausch zwischen der Tastatur und der zweiten elektrischen Vorrichtung mit Hilfe von Funksignalen statt. Dabei wird bevorzugt das 2,4 GHz ISM (Industrial Scientific Medicine) Frequenzband verwendet. Dieses Frequenzband kann lizenzfrei verwendet werden. Ein bevorzugte Realisierung des Datentransfers im ISM Frequenzband ist durch den Bluetooth-Standard gegeben.

Die zweite Vorrichtung sind bevorzugt elektronische Geräte, welche zu einem bidirektionalen Datenaustausch imstande sind. Bidirektional bedeutet in diesem Zusammenhang, daß die elektrischen Geräte Daten empfangen und auch eigene Daten senden können. Solche Geräte sind z.B. Computer, Mobilfunkgeräte oder elektronische Zeitplaner im Taschenformat.

Zum ungestörten Datenaustausch ist die Sende- und Empfangsvorrichtung vorzugsweise oben oder seitlich in der Tastatur integriert.

Durch das Zusammenwirken von Personalcomputer, Tastatur und externem elektrischen Gerät ist somit eine Kommunikation zwischen dem Personalcomputer und dem externen elektrischen Gerät möglich. Dadurch können Daten abgeglichen werden. Es ist aber auch möglich, ein Gerät zu synchronisieren.

Prinzipiell ist es auch denkbar, daß die externe elektrische Vorrichtung mit einer weiteren elektrischen Vorrichtung in Verbindung steht. Beispielhaft ist hier nur ein Mobilfunkgerät genannt, welches Datenfernübertragung über ein Telekommunikationsnetz mit einer anderen Datenendeinrichtung (Fax, Modem, Mobilfunkgerät, ISDN, usw.) durchführt oder welches direkt von einem anderen Mobilfunkgerät empfängt und auch Daten an diese sendet. Entsprechend können aber auch andere elektrische Geräte an das externe elektrische Gerät angekoppelt werden.

Weitere Einzelheiten und Merkmale der Erfindung sind aus der folgenden Beschreibung unter Bezugnahme auf die Zeichnung ersichtlich.

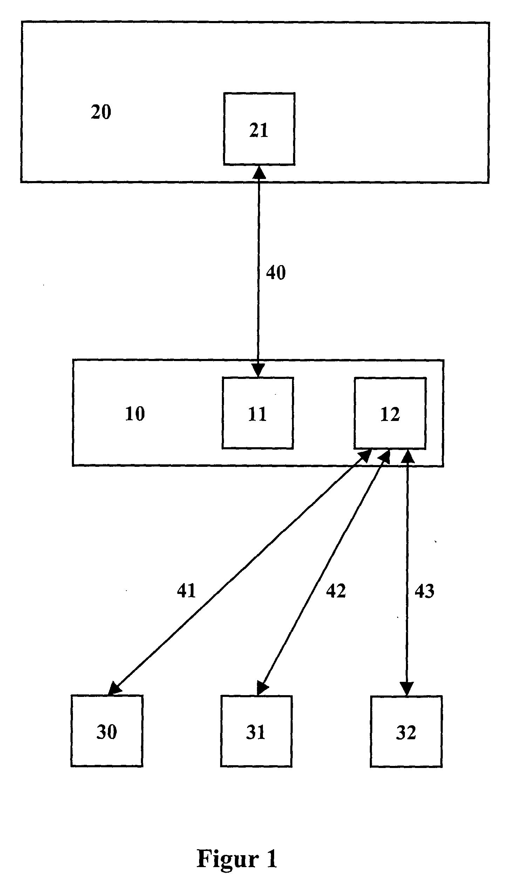

Figur 1 zeigt eine schematische Darstellung einer speziellen Ausführungsform der Anbindung einer Tastatur an mehrere externe elektrische Vorrichtungen.

Darin sind eine erste elektrische Vorrichtung 20, eine Tastatur 10 und mehrere zweite elektrische Vorrichtungen 30, 31 und 32 dargestellt. Die erste elektrische Vorrichtung 20 und die Tastatur weisen USB kompatible Schnittstellen 21 und 11 auf. Der Datenaustausch 40 zwischen den USB kompatiblen Schnittstellen 21 und 11 kann mit oder ohne Kabel realisiert sein. Die Tastatur weist desweiteren eine Sende- und Empfangseinrichtung 12 auf. Diese Einrichtung 12 kommuniziert bidirektional 41, 42, 43 mit mehreren externen elektrischen Vorrichtungen 30, 31 und 32. Die Sende- und Empfangseinrichtung 12 ist vorzugsweise in dem Gehäuse der Tastatur 10 integriert und vorzugsweise eine Infrarotschnittstelle.

## Patentansprüche

1. Tastatur mit einer Schnittstelle (11), wobei die Tastatur über die Schnittstelle mit einer ersten elektrischen Vorrichtung (20) in Verbindung steht und eine Sende- und Empfangseinrichtung (12) zum drahtlosen Verbinden der Tastatur mit mindestens einer zweiten elektrischen Vorrichtung (30, 31, 32) aufweist, **dadurch gekennzeichnet, daß** ein bidirektionaler Datenaustausch (41, 42, 43) zwischen der Tastatur (10) und der zweiten elektrischen Vorrichtung (30, 31, 32) stattfindet.

2. Tastatur nach Anspruch 1, **dadurch gekennzeichnet, daß** der Datenaustausch (41, 42, 43) zwischen der Tastatur (10) und der zweiten Vorrichtung (30, 31, 32) über Infrarotsignale läuft.

3. Tastatur nach Anspruch 1, **dadurch gekennzeichnet, daß** der Datenaustausch (41, 42, 43) zwischen der Tastatur (10) und der zweiten Vorrichtung (30, 31, 32) über Funksignale läuft.

4. Tastatur nach Anspruch 3, **dadurch gekennzeichnet, daß** die Funksignale im 2,4 GHz ISM Frequenzband gesendet werden.

5. Tastatur nach einem der vorhergehenden Ansprüche, **dadurch gekennzeichnet, daß** die Verbindung (40) zwischen der ersten Vorrichtung (20) und der Tastatur (10) über die Schnittstelle drahtlos ist.

6. Tastatur nach einem der vorhergehenden Ansprüche, **dadurch gekennzeichnet, daß** die Schnittstelle (11) eine USB kompatible Schnittstelle ist.

7. Tastatur nach einem der vorhergehenden Ansprüche, **dadurch gekennzeichnet, daß** die erste Vorrichtung (20) ein Computer oder ein Fernsehgerät ist.

8. Tastatur nach einem der vorhergehenden Ansprüche, **dadurch gekennzeichnet, daß** die zweite Vorrichtung (30, 31, 32) ein Computer, ein Mobilfunkgerät oder ein elektronischer Zeitplaner ist.

9. Tastatur nach einem der vorhergehenden Ansprüche, **dadurch gekennzeichnet, daß** die Sende- und Empfangseinrichtung (12) vorzugsweise oben oder seitlich in der Tastatur (10) integriert ist.

10. Tastatur nach einem der vorhergehenden Ansprüche, **dadurch gekennzeichnet, daß** die erste Vorrichtung (20) mit der zweiten Vorrichtung (30, 31, 32) kommuniziert.

11. Tastatur nach einem der vorhergehenden Ansprüche, **dadurch gekennzeichnet, daß** die zweite Vorrichtung (30, 31, 32) mit weiteren elektrischen Vorrichtungen in Verbindung steht.
